# EUROPEAN PATENT SPECIFICATION

(11) **EP 3 260 719 B1**
(45) Date of publication and mention of the grant of the patent: **24.10.2018**
(21) Application number: 16425062.3
(22) Date of filing: 23.06.2016
(51) Int. Cl.: F16D 7/00, F16D 41/00, F16D 43/202, F16D 47/04

(54) **ASSEMBLY OF A TORQUE LIMITING DEVICE AND FREEWHEEL IN A MECHANICAL TRANSMISSION**
ANORDNUNG EINER DREHMOMENTBEGRENZUNGSVORRICHTUNG UND FREILAUF FÜR EIN MECHANISCHES GETRIEBE
ASSEMBLAGE D'UN DISPOSITIF DE LIMITATION DE COUPLE ET ROUE LIBRE DANS UNE TRANSMISSION MÉCANIQUE

(43) Date of publication of application: 27.12.2017
(73) Proprietor: Benzi & Di Terlizzi s.r.l., 20065 Inzago (MI) (IT)
(72) Inventor: Benzi, Vito Carlo, 20065 Inzago (MI) (IT)
(74) Representative: Ferraiolo, Ruggero

(56) References cited:
- EP-A1- 2 706 253
- WO-A1-2013/162734
- DE-A1-102008 042 029

## Description

### Field of the invention.

The invention is in the field of power transmission mechanical devices, in particular of mechanical devices suitable for transmitting power from a tractor to a driven machine.

The term "tractor" in this application shall be intended as any towing machine like an agricultural tractor, a truck tractor, a train tractor and the like.

### State of the art.

There are several assemblies made by the applicant and third parties that, in different ways, perform the same function of transmitting power from a tractor to a driven machine; an example is given by a torque limiting device comprising clutch discs associated with a free wheel. As known, certain torque limiting devices provide automatic re-engagement and interrupt the power transmission when the torque exceeds the calibration value and for restoring the motion it is sufficient to reduce the speed or the torque transmitted or stop the motion, so automatically obtaining the re-engagement. Again as known, the free wheel eliminates the power returns to the tractor during the deceleration phases and is suitable for those operating machines that possess high inertial mass.

The power transmissions identified here below are known where the means used for incorporating a re-engagement or freewheel device are substantially different from those claimed in the application:
- document DE 10 2008 042 029 A1 that discloses a torque limiting device for use in a motor vehicle where a freewheel is located between one coupling disc and a driving shaft or a moved shaft for rotating the latter.
- document WO 2013/162734 A1 that discloses a torque limiting coupling system for use on wind turbines; an asymmetric torque limiter interconnects a wind turbine with a generator shaft, the coupling including an input housing and an output hub with an freewheel mechanism interposed between them.
- document EP 2 706 253 A1 that discloses a torque limiting device in which an automatic and synchronized re-engagement of the torque transmission is provided.

### Disadvantages of the prior art.

The state of the art comprises a torque limiting device and a free wheel mounted separately in the cardan transmission device exclusively on the driven side. Consequently, the side driven machine joint comprises a device on the inner yoke and a device on the attack yoke, greatly expensive, involving large dimensions that could hardly be protected by a conventional protection means meeting the regulatory requirements.

### Objects of the invention.

A first object of the invention is to make available a compact device comprising an assembly of a torque limiting device and a free wheel. Another object is to allow the use of the conventional protection means for the cardan transmission devices without having to modify them.

### Background of the invention.

The idea of solution for achieving the above objects is to combine in a single mechanical assembly, to be provided on driven machine side as required by the regulations in force, a torque limiting device providing the automatic re-engagement and a free-wheel device of simple construction, compact and cheap.

The invention is disclosed in the example of embodiment and in the drawing.

### Advantages of the invention.

The main advantages ot the invention are the following:
-. The ability to assemble a single device on the driven machine side on a cardan transmission that achieves two functions, that ot interrupting tne torque on reaching a predetermined value and of working as a free wheel preventing the torque returns.
-. Limited dimensions in extension and diameter.
-. Possibility ot using a conventional protection means for cardan protection devices without having to change them.
- Construction ot the assembly by the use ot standard elements.
- The fact that a first group of springs and their first pawls, actuated during the automatic function ot the limiting device, are different from a second group ot springs and relevant pawls operated during the free wheel function involves the further advantage of reducing the wear and tear and the need for the maintenance ot the above elements, the first being subjected to a high load with low frequency interventions, the second being subjected to a lower load, but with much more frequent interventions.

### Description of the invention.

The invention will now be described in detail with an example of embodiment and with reference to the accompanying drawing in which
- Fig. 1 is a first sectional view, the
- Fig. 2 is an exploded assembly, the

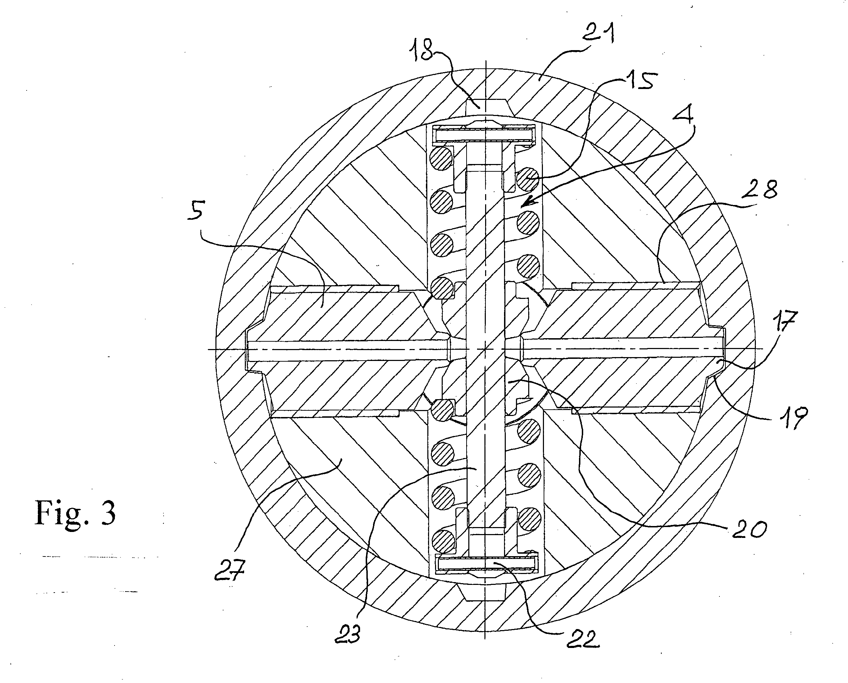

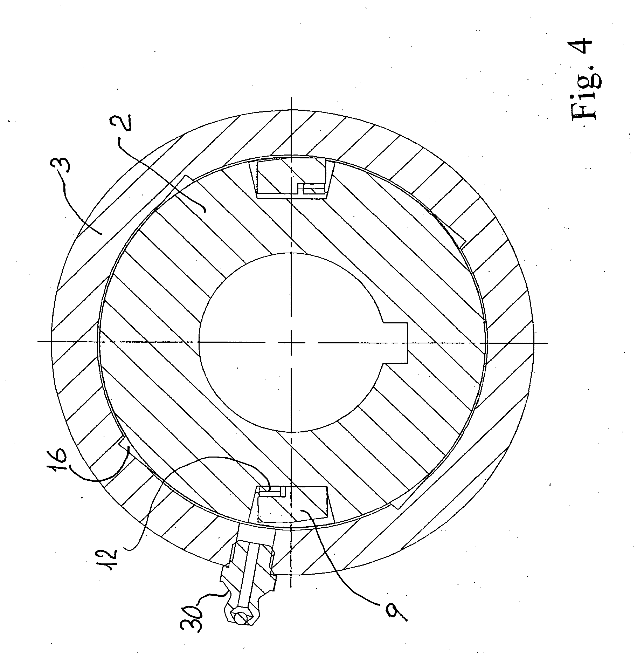

- Fig. 3 is a second sectional view along X-X of Fig. 1.

In the set of the figures there are shown: the outer housing 1 and the inner housing 3; springs 15 of the group of springs 4 preloaded so as to apply a predetermined thrust on the first pawls 5 which in turn transmit the thrust received to the outer housing 1 comprising a yoke 1A fixed inW1 to a disk 1B substantially perpendicular to the axis A-A of the assembly and welded in W2 to a coaxial cylindrical element 21. It is understandable that, to connect (W1) a tractor with the disk IB, the function of the assembly does not change if the alternative is realized where the yoke 1A is replaced by a male splined connecting pin or by a flange bolted to the disc 1B or by a connection pin with female splined hub. Between the inner housing 3 and the sealing ring 11 a spacer ring 6 and a retaining seeger type ring 8 are housed. The cylindrical element 21 has seats 18 suitable for receiving the ends 17 of the first pawls 5 sliding within dry self-lubricating bushings 28. The thrust of the ends 17 on the cylindrical element 21 generates a friction action on the surfaces 19 of the seats 18 that permits to transmit a torque value dependent on the spring preload force. When the transmitted torque is sufficient to overcome the friction present on the surfaces 19 and compress the springs 15 of the spring group 4, the device is triggered, the ends 17 come out from the seats 18 and the first pawls 5 are held in the release position by rings 20 as long as the torque or the transmission speed is reduced so that said pawls are released and return in the seats having completed a rotation of ninety degrees with respect to the longitudinal axis A-A of the assembly.

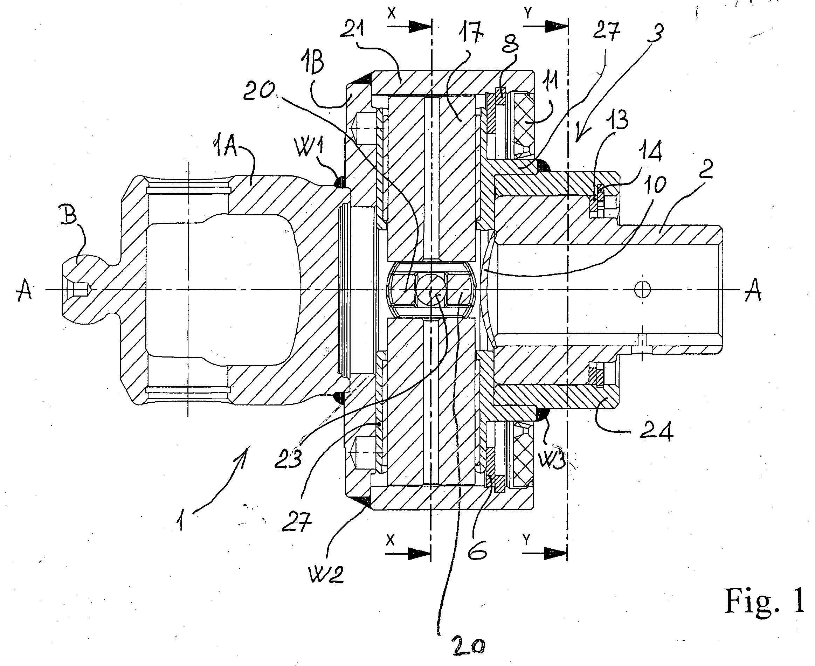

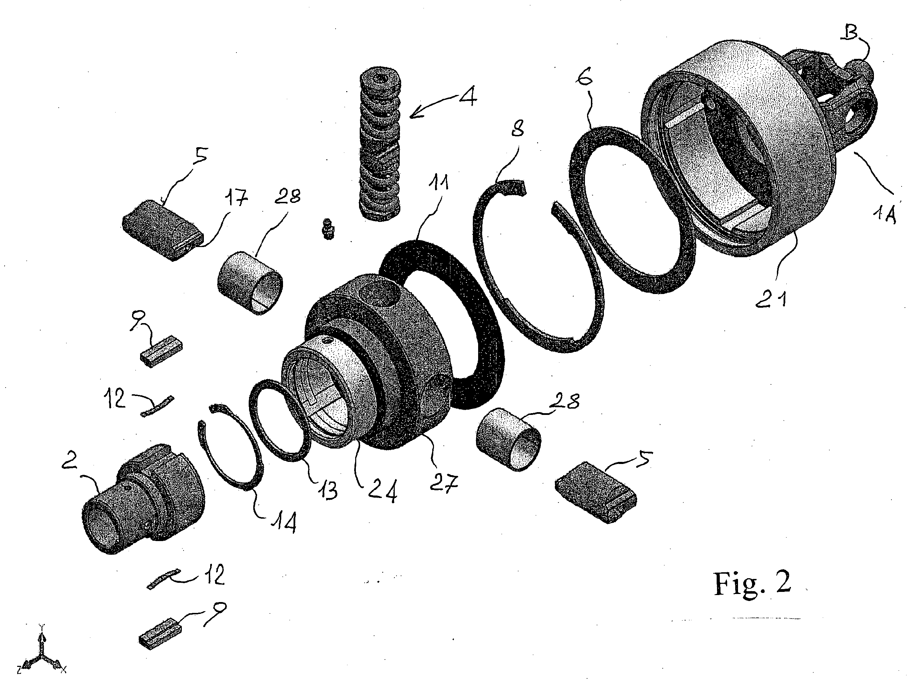

In particular, with reference to Fig. 1, the freewheel device is shown that comprises a hub 2 held in position by the spacer element 13 and retaining ring type seeger 14 and the tube 24 welded to the hole disk 27 carrying seats suitable to contain second pawl 9 pushed to the periphery by leaf springs 12 when the dragging of the freewheel 3 starts.
- The spring group 4 comprises two springs 15, two guide discs 20, two closure disks 22 with threaded hole and a pin 23 with the threaded ends that allows to calibrate the spring groups 4, 15 to change the value of the assembly limit torque (Fig. 2).
   - The seal ring 11 is a conventional ring type "corteco" which has the task of holding the lubricating grease within the assembly, thus providing a sort of compact container of the most of the assembly.
   - The shaped cap 10 is designed to prevent the grease to come out from the device and the entry of foreign bodies.
   - Both the outer housing 1 and the inner housing 3 have threaded holes that allow the application of grease guns 30 for the proper lubrication of the assembly.

## Claims

1. Assembly of torque limiting device and freewheel in a mechanical transmission where driving and driven means are rotatably connected for keeping or interrupting the rotation of the driven means **characterized in that** there are comprised:
- an outer housing (1) comprising a conventional means (1A) suitable for connecting a mechanical tractor means with a disc (1B) substantially perpendicular to the longitudinal axis (A-A) of the assembly and fixed (W1) at the distal end of said conventional means, a longitudinal cylindrical element (21) welded (W2) on the perimeter of said disk (1B) and the sealing ring (11) inserted between the cylindrical element (27) belonging to the inner housing and the longitudinal cylindrical element (21) belonging to the disk (1B) to allow a range of torques to be transmitted to the driven machine by a suitable hub (2).
- the inner housing (3) carrying means capable of functioning as a conventional torque limiting device with automatic re-engagement obtained by welding (W3) a full cylindrical element (27) to a tubular element (24, W3) the solid cylindrical element (27) carrying radial holes to contain a conventional spring group (4, 15) and first pawls (5) for dragging the outer housing (1), the hub 2 carrying seats suitable for containing seconds pawls (9) for dragging the free wheel.

2. Assembly according to claims 1 **characterized in that** said cylindrical element (21) has seats (18) adapted to receive the ends (17) of the first pawls (5).

3. Assembly according to claims 1 and 2 **characterized in that** the cavities (16) of the inner housing (3) allow the second pawls (9), once pushed radially outwards by springs (12), to drag the hub (2) exclusively in one direction of rotation.

4. Assembly according to claims 1 and 2 **characterized in that** the springs (15) of the spring group (4) are preloaded so as to apply a predetermined pressure on the first pawls (5) which in turn transmit the received thrust to the outer housing (1).

5. Assembly according to claim 4 **characterized in that** the spring group (4) comprises a threaded pin (23) suitable for adjusting the compression of the springs (15) to change the value of the limit torque of the assembly.

## Patentansprüche

1. Anordnung einer Drehmoment-Begrenzungsvorrichtung und eines Freilaufs in einer mechanischen Transmission, wobei die antreibende und die angetriebene Einrichtung drehbar verbunden sind, um die Drehung der angetriebenen Einrichtung beizubehalten oder zu unterbrechen, **dadurch gekennzeichnet, dass** vorhanden ist:
- ein äußeres Gehäuse (1) mit einer konventionellen Einrichtung (1A), die zur Verbindung einer mechanischen Traktor-Einrichtung mit einer Scheibe (1B) geeignet ist, die im wesentlichen senkrecht zu der Längsachse (A-A) der Anordnung ist und an dem distalen Ende der konventionellen Einrichtung befestigt (W1) ist, ein längliches zylindrisches Element (21), das an dem Umfang der Scheibe (1B) geschweißt (W2) ist, und der Dichtungsring (11) zwischen das zylindrische Element (27), das zu dem inneren Gehäuse gehört und das längliche zylindrische Element (21), das zu der Scheibe (1B) gehört, eingefügt ist, um zu erlauben, dass ein Bereich von Drehmomenten an die angetriebene Maschine über eine geeignete Nabe (2) übertragen wird,
- das innere Gehäuse (3), das eine Einrichtung trägt, die in der Lage ist, als eine konventionelle Drehmoment-/Begrenzungsvorrichtung mit automatischem Wiedereingriff zu funktionieren, der durch Schweißen (W3) eines vollen zylindrischen Elements (27) an ein rohrfömiges Element (24, W3) erhalten wird, wobei das feste zylindrische Element (27) radiale Löcher trägt, um eine konventionelle Federgruppe (4, 15) und erste Klinken (5) zum Ziehen des äußeren Gehäuses (1) aufzunehmen, wobei die Nabe (2) Sitze trägt, die zur Aufnahme von zweiten Klinken (9) zum Ziehen des Freilaufs geeignet sind.

2. Anordnung nach Anspruch 1, **dadurch gekennzeichnet, dass** das zylindrische Element (21) Sitze (18) aufweist, die zur Aufnahme der Enden (17) der ersten Klinken (5) ausgebildet sind.

3. Anordnung nach Anspruch 1 und 2, **dadurch gekennzeichnet, dass** die Hohlräume (16) des inneren Gehäuses (3) ermöglichen, dass die zweiten Klinken (9) radial nach außen durch die Federn (12) geschoben werden, um die Nabe (2) exklusiv in eine Drehrichtung zu ziehen.

4. Anordnung nach Anspruch 1 und 2, **dadurch gekennzeichnet, dass** die Federn (15) der Federgruppe (4) vorbelastet sind, um so einen vorgegebenen Druck auf die ersten Klinken (5) anzulegen, die ihrerseits den empfangenden Schub an das äußere Gehäuse (1) übertragen.

5. Anordnung nach Anspruch 4, **dadurch gekennzeichnet, dass** die Federgruppe (4) einen Gewindestift (23) aufweist, der zur Einstellung der Kompression der Federn (15) geeignet ist, um den Wert des Grenzmomentes der Anordnung zu ändern.

## Revendications

1. Ensemble constitué par un dispositif limitateur de couple et une roue libre dans une transmission mécanique dans laquelle des moyens d'entraînement et des moyens entraînés sont reliés solidairement en rotation pour maintenir ou interrompre la rotation des moyens entraînés,
**caractérisé en ce qu'**il comporte :
- un carter externe (1) comprenant des moyens classiques (1A) permettant de relier des moyens de traction mécanique à un disque (1B) essentiellement perpendiculaire à l'axe longitudinal (A-A) de l'ensemble et fixé (W1) à l'extrémité distale des moyens classiques, un élément longitudinal cylindrique (21) soudé (W2) à la périphérie du disque (1B) et une bague d'étanchéité (11) insérée entre un élément cylindrique (27) solidaire d'un carter interne (3), et l'élément longitudinal cylindrique (21) solidaire du disque (1B) pour permettre la transmission d'une plage de couples à la machine entraînée par un moyeu (2) adapté,
- le carter interne (3) portant des moyens susceptibles de fonctionner en tant que dispositif limitateur de couple classique équipé d'un réengagement automatique obtenu en soudant (W3) un élément cylindrique large (27) à un élément tubulaire (24, W3), l'élément cylindrique solide (27) ayant des perçages radiaux destinés à renfermer un groupe de ressorts classiques (4, 15) et des premiers cliquets (5) permettant de racler, le carter externe (1), le moyeu (2) portant des logements susceptibles de renfermer des second cliquets (9) permettant de racler la roue libre.

2. Ensemble, conforme à la revendication 1,
**caractérisé en ce que**
l'élément cylindrique (21) comporte des logements (18) susceptibles de recevoir les extrémités (17) des premier cliquets (5).

3. Ensemble, conforme aux revendications 1 et 2,
**caractérisé en ce que**
les cavités (16) du carter interne (3) permettent aux seconds cliquets (9) lorsqu'ils ont été poussés radialement vers l'extérieur par des ressorts (12) de traîner le moyeu (2) dans une seule direction de rotation.

4. Ensemble, conforme aux revendications 1 et 2,
**caractérisé en ce que**
les ressorts (15) du groupe de ressorts (4) sont précontraints de façon à appliquer une force de pression prédéfinie sur les premiers cliquets (5) qui à leur tour transmettent la poussée reçue au carter externe (1).

5. Ensemble, conforme à la revendication 4,
**caractérisé en ce que**
le groupe de ressorts (4) comprend une broche filetée (23) susceptible de régler la compression des ressorts (15) pour modifier la valeur du couple limite de l'ensemble.
